# EUROPEAN PATENT APPLICATION

(11) **EP 4 730 571 A1**
(43) Date of publication of application: **22.04.2026**
(21) Application number: 25203846.8
(22) Date of filing: 22.09.2025
(51) Int. Cl.: H01R 13/443, H01R 13/639, H01R 13/447

(54) **LOCKING DEVICE FOR SOCKET WITH INSULATING BLOCK AND LOCKABLE RETAINER PLATE**

(30) Priority: 18.10.2024 CN 202422524392 U
(71) Applicant: Caterpillar, Inc., Peoria, IL 61629-6450 (US)
(72) Inventor: PEI, Xincai, Qingdao, 266100 (CN); YU, Zailan, Qingdao, 266100 (CN); YANG, Haibin, Qingdao, 266100 (CN)
(74) Representative: Boult Wade Tennant LLP

(57) **Abstract**

The present disclosure relates to a LOTO for an MSD switch, a power battery comprising the LOTO, and a work machinery comprising the power battery. The MSD switch comprises a socket formed with a cavity. The LOTO comprises: a lock bracket which is disposed adjacent to the socket and is provided with a lock hole; a retainer which can be releasably locked with the lock bracket; and an insulating block which is mounted on the retainer. The retainer and the insulating block are configured such that when the retainer is locked to the lock bracket, the insulating block engages in the cavity. The LOTO of the present disclosure features simple structure and assembly, low cost and high versatility.

## Description

### Technical Field

The present disclosure relates to Manual Service Disconnect Switch (hereinafter referred to as "MSD switch"), and more particularly to a Lock Out Tag Out (LOTO) for a MSD switch, a power battery comprising the LOTO, and a work machinery comprising the power battery.

### Background

The MSD switch used in electric vehicles or work machinery is a high-voltage, high-current mechanical switch, which can disconnect high-voltage circuits to ensure safety of maintenance personnel or to handle emergencies. The MSD switch may include accessories such as a socket (a copper bar and an interlock device), a plug (a fuse, a copper bar, an interlock device, etc.), and a sealing element. The socket and the plug together form a high-voltage interlock circuit. In case of extreme overcurrent or short-circuit conditions, the built-in fuse will cut off the high-voltage circuit. During maintenance of the vehicle circuit system, the plug can be disconnected from the socket to interrupt the high-voltage circuit.

When the plug of the MSD switch is disconnected from the socket, if the copper bar of the socket is exposed to the environment, the risk of high-voltage power-on is likely to occur. Therefore, it is necessary to provide a LOTO to prevent such situations. Existing LOTOs are high in cost and poor in versatility.

### Summary

It is an object of the present disclosure to solve at least one of the above problems and/or other problems existing in the prior art.

To achieve the above object, an aspect of the present disclosure provides a LOTO for an MSD switch, the MSD switch comprising a socket formed with a cavity, the LOTO comprising a lock bracket, a retainer, and an insulating block. The lock bracket is disposed adjacent to the socket and is provided with a lock hole. The retainer can be releasably locked with the lock bracket. The insulating block is mounted on the retainer. The retainer and the insulating block are configured such that when the retainer is locked to the lock bracket, the insulating block engages in the cavity.

According to an embodiment of the present disclosure, the retainer comprises a cover plate portion that covers an opening of the cavity, and the insulating block is mounted on the cover plate portion.

According to an embodiment of the present disclosure, the cover plate portion is provided with a mounting hole, and a bolt passes through the mounting hole and is threadedly connected to a nut on the insulating block.

According to an embodiment of the present disclosure, the nut is integrally formed on the insulating block by means of insert injection molding.

According to an embodiment of the present disclosure, the retainer further comprises an extension portion extending from one side of the cover plate portion toward the lock bracket.

According to an embodiment of the present disclosure, the retainer further comprises a flange connected to the cover plate portion on a side opposite to the extension portion.

According to an embodiment of the present disclosure, the lock bracket comprises a main body portion and a plug-in portion extending from the main body portion and provided with the lock hole, the retainer further comprises a hooking portion connected to the side of the extension portion away from the cover plate portion and provided with a plug-in hole, and the plug-in portion can pass through the plug-in hole from one side of the hooking portion, such that the hooking portion is hooked on the plug-in portion and the lock hole is exposed on the other side of the hooking portion.

According to an embodiment of the present disclosure, the insulating block is made of a high-voltage-resistant rubber material.

Another aspect of the present disclosure provides a power battery, which comprises a housing, an MSD switch, and a LOTO as described above. The socket of the MSD switch can be mounted on a first wall of the housing. The lock bracket can be mounted on a second wall of the housing.

According to an embodiment of the present disclosure, the lock bracket is fixed to the second wall of the housing by a bolt used for securing a battery cover of the power battery.

Yet another aspect of the present disclosure provides a work machinery, which comprises the power battery as described above.

The LOTO for the MSD switch of the present disclosure features simple structure and assembly, low cost and high versatility. By locking the retainer equipped with the insulating block to the lock bracket, the insulating block is held in the cavity of the socket, thereby isolating the copper bar in the cavity from the maintenance environment, which enables the protective function and meets the electrical protection requirements.

### Brief Description of the Drawings

The features and advantages of the present disclosure will become apparent from the detailed description provided below with reference to the accompanying drawings. It will be appreciated that the drawings are merely schematic and not necessarily drawn to scale, and thus shall not be construed as limiting the present disclosure.
FIG. 1 illustrates a schematic diagram of a power battery according to an embodiment of the present disclosure in a state where a plug of the MSD switch is disconnected from the socket.
FIG. 2 illustrates a schematic diagram of the power battery according to the embodiment in a state where a LOTO for the MSD switch is mounted.
FIG. 3 illustrates a perspective view of a retainer and am insulating block of the LOTO.
FIG. 4 illustrates an exploded view of the retainer and the insulating block of the LOTO.
FIG. 5 illustrates a perspective view of a lock bracket of the LOTO.

### List of Reference Signs

1. Housing; 2. Socket; 21. Cavity; 3. Lock bracket; 31. Main body portion; 32. Plug-in portion; 321. Lock hole; 4. Retainer; 41. Hooking portion; 411. Plug-in hole; 42. Extension portion; 43. Cover plate portion; 431. Mounting hole; 44. Flange; 5. Insulating block; 6. Bolt; 7. Nut; 8. Gasket.

### Detailed Description

Embodiments of the present disclosure will be described below with reference to the drawings. In the following description, numerous specific details are set forth in order to make those skilled in the art fully understand and implement the present disclosure. However, it will be apparent to those skilled in the art that the present disclosure may be implemented without some of these specific details. Furthermore, it will be appreciated that the present disclosure is not limited to the specific embodiments described herein. Rather, any combination of features and elements described below can be used to implement the present disclosure, regardless of whether they relate to different embodiments. Therefore, the following aspects, features, embodiments and advantages are for illustration only, and should not be regarded as elements or limitations of the claims, unless explicitly stated in the claims.

The terms "comprising", "including" and "having" are used herein to indicate an open-ended inclusion, and mean that there may be other elements/components besides the listed elements/components.

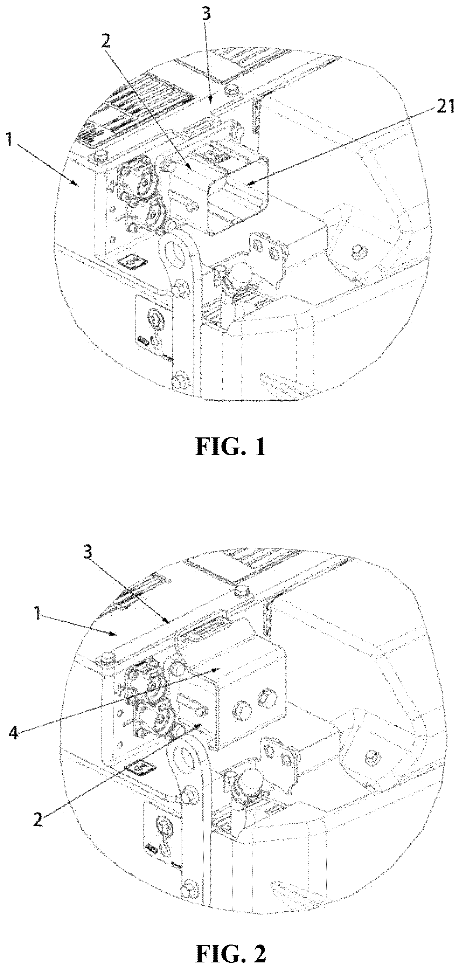

FIGS. 1 and 2 illustrate a power battery according to an embodiment of the present disclosure. As shown in FIGS. 1 and 2, the power battery according to the embodiment may include a housing 1, a plurality of battery modules (not shown), one or more MSD switches electrically connected between adjacent battery modules, and a LOTO for each MSD switch.

The housing 1 can broadly comprise a battery cover, a tray, various battery brackets, end plates, etc. The housing 1 forms a "skeleton" of the power battery and can play roles in supporting, resisting mechanical impact and mechanical vibration, and environmental protection (such as waterproofing and dustproofing). Multiple battery modules are mounted in the housing 1 and can provide power for electric vehicles or work machinery.

The MSD switch may include a socket 2 and a plug (not shown). The socket 2 may be connected in series between two adjacent battery modules, or between every two, three or more battery modules. The socket 2 may be provided with copper bars (usually two) for electrical connection with the plug, an interlock device forming a high-voltage interlock circuit with the plug, etc. The plug may be provided with a fuse for automatically disconnecting the high-voltage circuit in case of extreme overcurrent or short circuit, a copper bar for electrical connection with the copper bar of the socket to connect the fuse into the high-voltage circuit, and an interlock device forming a high-voltage interlock circuit with the socket, etc.

As shown in FIG. 1, the socket 2 may be formed with a cavity 21 for receiving the plug. An axial end of the cavity 21 has an opening. The plug can be inserted into the cavity 21 from the opening and fixed to the socket 2 via a buckle structure of the socket 2 corresponding to an outer side of a peripheral wall of the cavity 21, thereby closing the high-voltage circuit of the power battery, wherein the fuse on the plug is engaged into the high-voltage circuit. When the plug is disconnected from the socket 2 to interrupt the high-voltage circuit, the copper bars on the socket 2 are exposed. Due to the short distance between the two copper bars, there is a risk of electric shock if maintenance personnel accidentally touch both copper bars simultaneously. With the LOTO assembled on the socket, the copper bars can be isolated to prevent the maintenance personnel from accidentally touching them.

Referring to FIGS. 2 to 5, the LOTO in this embodiment may include a lock bracket 3, a retainer 4, and an insulating block 5.

The lock bracket 3 is fixed to the housing 1 of the power battery at a position adjacent to the socket 2, for example, fixed to a top wall of the housing 1, that is, the battery cover. As shown in FIGS. 1, 2, and 5, the lock bracket 3 may include a main body portion 31 and a plug-in portion 32. The main body portion 31 is roughly in a long strip shape, and can overlap with an edge portion of the top wall of the housing 1. The main body portion 31 can be fixed to the housing 1 by, for example, bolts (especially bolts for securing the battery cover). The plug-in portion 32 extends outward beyond the top wall of the housing 1 at an approximate middle position of the main body portion 31 along the width direction, so that it can be suspended above the socket 2. A lock hole 321, through which the lock can pass, is provided at the center of the plug-in portion 32.

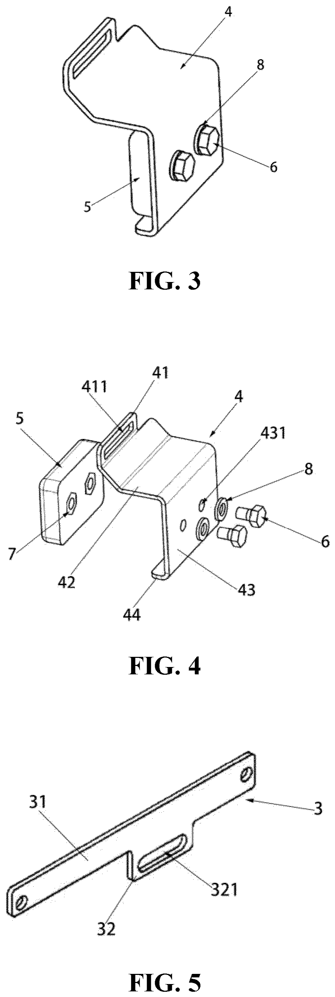

One end (the upper end shown in FIGS. 2 to 4) of the retainer 4 is releasably locked to the lock bracket 3. The retainer 4 at least covers the opening of the cavity 21. As shown in FIGS. 3 and 4, the retainer 4 in this embodiment may include a hooking portion 41, an extension portion 42, a cover plate portion 43, and a flange 44 arranged in sequence from top to bottom.

When the retainer 4 is locked to the lock bracket 3, the hooking portion 41 is located at a position substantially corresponding to a bottom of the socket 2 and extends approximately in the vertical direction. The hooking portion 41 can be attached to a side wall of the housing 1. A plug-in hole 411, through which the plug-in portion 32 of the lock bracket 3 can pass, is provided at the center of the hooking portion 41. When the plug-in portion 32 passes through the plug-in hole 411 so that the lock bracket 3 and the retainer 4 are in the state shown in FIG. 2, a lock can be provided at the lock hole 321 for locking.

The extension portion 42 may include a first section and a second section. The first section extends obliquely downward from the hooking portion 41 in a direction toward the opening of the cavity 21 of the socket 2. The second section extends from an end of the first section away from the hooking portion 41 substantially along an axial direction of the socket 2 (the horizontal direction in FIGS. 3 and 4) and beyond the opening end of the socket 2.

The cover plate portion 43 extends from an end of the extension portion 42 away from the hooking portion 41 (that is, an end of the second section away from the first section) substantially parallel to a plane where the opening of the cavity 21 is located. The surface area of the cover plate portion 43 is slightly larger than the opening area of the cavity 21. The cover plate portion 43 is provided with, for example, two mounting holes for mounting the insulating block 5, which will be described in detail below.

The cross-sectional shape of the socket 2 and its cavity 21 is preferably square. Thus, the socket 2 has an upper side wall and a lower side wall arranged oppositely. The flange 44 and the extension portion 42 are arranged on opposite sides of the cover plate portion 43, so that the second section of the extension portion 42 can be attached to the upper side wall of the socket 2, and the flange 44 can be attached to the lower side wall of the socket 2.

The insulating block 5 is mounted on a side of the retainer 4 facing the cavity 21. The shape of the insulating block 5 can be adapted to the shape of the cavity 21, and is preferably square. A space for receiving the upper side wall of the socket 2 can be provided between the upper edge of the insulating block 5 and the second section of the extension portion 42. A space for receiving the lower side wall of the socket 2 can be provided between the lower edge of the insulating block 5 and the flange 44. When the retainer 4 is locked to the lock bracket 3, the insulating block 5 is at least partially engaged in the cavity 21 to prevent accidental contact with the copper bars in the socket 2.

Referring to FIGS. 3 and 4, the insulating block 5 in this embodiment is fixed to the cover plate portion 43 of the retainer 4 by means of threaded connection. More specifically, the LOTO in this embodiment further includes a bolt 6, a nut 7, and a gasket 8. As an example, the insulating block 5 can be made of a soft insulating material such as high-voltage-resistant rubber. The nut 7 can be integrally formed on the insulating block 5 by means of insert injection molding. The bolt 6 can pass through the gasket 8 and the mounting hole 431 of the cover plate portion 43 to be threadedly connected to the nut 7 on the insulating block 5.

In another embodiment, a receiving hole may be provided on the insulating block 5, and the nut 7 may be accommodated in the receiving hole and fixed to the insulating block 5 by welding, bonding, or the like. This is particularly applicable when the insulating block 5 is made of a hard insulating material.

The lock bracket 3 and the retainer 4 can be made of steel or high-strength resin materials. For example, the retainer 4 can be formed by 3D printing technology or stamping.

The present disclosure further provides a power battery comprising the above-mentioned LOTO, and a work machinery comprising the above-mentioned power battery. The power battery may include a plurality of battery cells, and the plurality of battery cells may be divided into a plurality of battery modules. For example, each battery module may include one, two, three or more battery cells. An MSD switch may be provided between two adjacent battery modules. Thus, the work machinery can be equipped with a corresponding number of LOTOs. The lock brackets 3 of the LOTOs are respectively fixed between every two adjacent battery modules, and in the normal state where the plug is inserted into the socket 2, the corresponding retainer 4 and the insulating block 5 may be placed as a whole in a toolbox of the work machinery.

### Industrial Applicability

The LOTO according to the present disclosure is particularly suitable for work machinery powered by power batteries, which have high-voltage circuits and require MSD switches to ensure safety of maintenance personnel or to handle emergencies. However, it should be understood that the LOTO according to the present disclosure can also be used on other equipment with MSD switches, such as electric vehicles, hybrid vehicles, high-voltage distribution cabinets, etc.

When the plug of the MSD switch is disconnected from the socket to interrupt the high-voltage circuit, the copper bars in the socket are exposed to the environment. If maintenance tools or other conductors fall, or if maintenance personnel accidentally touch both copper bars simultaneously, the high-voltage circuit may be closed to cause danger. Therefore, it is necessary to provide a LOTO to protect the socket.

In the LOTO for the MSD switch according to the present disclosure, the lock bracket 3 is always fixed on one side of the socket 2, and in the normal state where the plug is inserted into the socket 2, the retainers 4 and the insulating blocks 5 of multiple LOTOs may be placed in a toolbox of the work machinery for standby. When the plug of the MSD switch is disconnected from the socket 2, for example, during maintenance work, the retainer 4 and the insulating block 5 fixed together can be taken out from the toolbox, and the insulating block 5 can be aligned with and pushed into the opening of the cavity 21 of the socket 2, so that the extension portion 42 and the flange 44 of the retainer 4 move along side walls of the socket 2. The plug-in portion 32 of the lock bracket 3 can pass through the plug-in hole 411 on the hooking portion 41 and expose the lock hole 321. A lock can pass through the lock hole 321 to lock the hooking portion 41 of the retainer 4 between the lock and the main body part 31, thereby locking the retainer 4 to the lock bracket 3.

The locking of the retainer 4 and the lock bracket 3 keeps the insulating block 5 in the cavity 21 of the socket 2. Thus, the insulating block 5 isolates the copper bars in the cavity 21 from the maintenance environment, and prevents accidental closing of the high-voltage circuit caused by maintenance personnel accidentally touching the copper bars, thereby fulfilling the protective function and meeting the electrical protection requirements.

The lock bracket 3 of the LOTO in the present disclosure is always fixed on one side of the socket 2, and the retainer 4 and the insulating block 5 as a whole may be arranged in the toolbox of the work machinery, making it easy for the maintenance personnel to take and store at any time.

The LOTO of the present disclosure can be secured with various types of maintenance locks, demonstrating high versatility.

For those skilled in the art, various modifications and variations of the embodiments disclosed herein may be made without departing from the scope or spirit of the present disclosure. Other embodiments of the present disclosure will be apparent to those skilled in the art according to the practice of the disclosure disclosed in this specification. The specification and examples disclosed herein shall be considered illustrative only, with the true scope of the present disclosure being determined by the appended claims and their equivalents.

## Claims

1. A LOTO for an MSD switch, the MSD switch comprising a socket (2) formed with a cavity (21), the LOTO being **characterized by** comprising:
a lock bracket (3), which is disposed adjacent to the socket (2) and is provided with a lock hole (321);
a retainer (4), which can be releasably locked with the lock bracket (3); and
an insulating block (5), which is mounted on the retainer (4),
wherein the retainer (4) and the insulating block (5) are configured such that when the retainer (4) is locked to the lock bracket (3), the insulating block (5) engages in the cavity (21).

2. The LOTO according to claim 1, wherein the retainer (4) comprises a cover plate portion (43) that covers an opening of the cavity (21), and the insulating block (5) is mounted on the cover plate portion (43).

3. The LOTO according to claim 2, wherein the cover plate portion (43) is provided with a mounting hole (431), and a bolt (6) passes through the mounting hole (431) and is threadedly connected to a nut (7) on the insulating block (5).

4. The LOTO according to claim 3, wherein the nut (7) is integrally formed on the insulating block (5) by means of insert injection molding.

5. The LOTO according to any one of claims 2 to 4, wherein the retainer (4) further comprises an extension portion (42) extending from one side of the cover plate portion (43) toward the lock bracket (3).

6. The LOTO according to claim 5, wherein the retainer (4) further comprises a flange (44) connected to the cover plate portion (43) on a side opposite to the extension portion (42).

7. The LOTO according to claim 5, wherein the lock bracket (3) comprises a main body portion (31) and a plug-in portion (32) extending from the main body portion (31) and provided with the lock hole (321),wherein the retainer (4) further comprises a hooking portion (41) connected to the side of the extension portion (42) away from the cover plate portion (43) and provided with a plug-in hole (411), and wherein the plug-in portion (32) can pass through the plug-in hole (411) from one side of the hooking portion (41), such that the hooking portion (41) is hooked on the plug-in portion (32) and the lock hole (321) is exposed on the other side of the hooking portion (41).

8. The LOTO according to any one of claims 1 to 4, wherein the insulating block (5) is made of a high-voltage-resistant rubber material.

9. A power battery, **characterized by** comprising a housing (1), an MSD switch, and a LOTO according to any one of claims 1 to 8, wherein the socket (2) of the MSD switch is mounted on a first wall of the housing (1), and the lock bracket (3) is mounted on a second wall of the housing (1).

10. The power battery according to claim 9, wherein the lock bracket (3) is fixed to the second wall of the housing (1) by a bolt used for securing a battery cover of the power battery.

11. A work machinery, **characterized by** comprising a power battery according to claim 9 or 10.
